Europäisches Patentamt

European Patent Office

Office européen des brevets

(19)

(11) Veröffentlichungsnummer: **0 230 216**
**B1**

(12) **EUROPÄISCHE PATENTSCHRIFT**

(45) Veröffentlichungstag der Patentschrift: **27.06.90**

(21) Anmeldenummer: **86890348.5**

(22) Anmeldetag: **18.12.86**

(51) Int. Cl.⁵: **D 06 N 3/00**

(54) **Vorrichtung zur Herstellung eines Überzuges auf einem flächenhaften Trägerkörper.**

(30) Priorität: **20.12.85 DE 3545399**

(43) Veröffentlichungstag der Anmeldung:
**29.07.87 Patentblatt 87/31**

(45) Bekanntmachung des Hinweises auf die
Patenterteilung:
**27.06.90 Patentblatt 90/26**

(84) Benannte Vertragsstaaten:
**DE ES FR GB IT NL**

(56) Entgegenhaltungen:
**DE-A-3 229 150**
**DE-A-3 309 992**
**DE-A-3 405 985**
**FR-A-2 372 895**

**PATENT ABSTRACTS OF JAPAN, Band 9, Nr.
211 (C-300)1934r, 29. August 1985; & JP-A-60 75
682 (TORAY K.K.) 30-04-1985**

**PATENT ABSTRACTS OF JAPAN, Band 9, Nr.
211 (C-300)1934r, 29. August 1985; & JP-A-60 75
683 (TORAY K.K.) 30-04-1985**

(73) Patentinhaber: **J. H. Benecke AG**
**Beneckeallee 40**
**D-3000 Hannover 1 (DE)**

(72) Erfinder: **Wagner, Werner, Dr. Dipl.Chem.**
**Harrenhorst 25**
**D-3052 Bad Nenndorf (DE)**
Erfinder: **Schaefer, Philipp**
**Oberstrasse 16**
**D-3000 Hannover (DE)**
Erfinder: **Büscher, Horst, Ing.**
**Ringstrasse 20**
**D-3012 Langenhagen (DE)**

(74) Vertreter: **Brauneiss, Leo et al**
**Patentanwälte Dipl.-Ing. Peter Boeckmann,
Dipl.-Ing. Leo Brauneiss Strohgasse 10
A-1030 Wien (AT)**

Courier Press, Leamington Spa, England.

**Beschreibung**

Die Erfindung betrifft eine Vorrichtung zur Herstellung eines Überzuges auf einem flächenhaften Trägerkörper, insbesondere zum Zurichten von Leder, vorzugsweise Spaltleder, oder Substraten mit auf zumindest einer Seite faseriger Oberfläche, mit einer Unterlage mit einer aus Silikonkautschuk oder Silikonharz bestehenden Oberfläche, auf die ein flüssiges Beschichtungsmaterial zur Herstellung einer nach Verfestigung die Sichtseite des Überzuges bildenden Folie aufgetragen wird, wobei die Oberfläche der Unterlage vorzugsweise mit einem Prägemuster, z.B. mit einer Naturledernarbenstruktur, versehen ist.

Unter dem Begriff Substrat wird hiebei ein Gewebe, Gewirke oder Vlies verstanden, das aus natürlichen oder synthetischen Fasern hergestellt ist und das auf zumindest einer Seite, ähnlich wie Spaltleder, von der Oberfläche abstehende Fasern aufweist, also spaltlederähnliche Eigenschaften besitzt und anstelle von Spaltleder zur Herstellung von Kunstleder Verwendung finden kann, wenn es mit einem von der Folie gebildeten dünnen Überzug versehen ist, der an seiner Sichtseite eine Naturledernarbenstruktur aufweist. Die abstehenden Fasern sowohl des Spaltleders als auch des Substrates werden hiebei in der den Überzug bildenden Folie verankert, so daß sich eine untrennbare Verbindung mit diesem Überzug ergibt.

Die Unterlage kann aus einer Platte oder einem Band, vorzugsweise aus einem endlosen, umlaufenden Band gebildet sein.

Es ist bereits bekannt, die Oberfläche von Spaltleder durch Aufbringen einer Kunststoffolie zu veredeln. Gemäß dem deutschen Patent Nr. 32 29 150 wird hiebei beispielsweise so vorgegangen, daß ein flüssiges Beschichtungsmaterial auf eine mit einem Prägemuster mit einer Naturledernarbenstruktur versehene Unterlage aufgebracht wird, die auf eine Temperatur zwischen 70° und 185°C erwärmt ist und dort zu einem das Prägemuster tragenden Film verfestigt wird, auf dem anschließend das Spaltleder unter Zwischenschaltung eines beispielsweise aus Polyurethandispersion bestehenden Klebstoffes aufgelegt wird, wobei anschließend das Spaltleder unter Einwirkung eines Vakuums mit dem Film verpreßt wird. Als flüssiges Beschichtungsmaterial, welches auf die Oberfläche der Unterlage zur Bildung des Films aufgebracht wird, wird beispielsweise eine wässerige Kunststoffdispersion, insbesondere Polyurethandispersion, verwendet. Bei dieser Vorgangsweise wird ein hervorragendes Endprodukt erhalten, bei welchem sehr dünne Folien als Zurichtung gebildet werden können, wobei Lufteinschlüsse in der Zurichtung oder zwischen der Zurichtung und dem Spaltleder vermieden werden und trotz unterschiedlicher Dicke an einzelnen Stellen des Spaltleders eine formschöne Sichtfläche erzielt wird.

Die Verwendung einer Unterlage aus Silikonkautschuk ist für die Herstellung der Folie besonders geeignet, denn die Oberfläche von Silikonkautschuk besitzt eine ausgeprägte Trenn- und Antiklebewirkung sowie eine sehr starke Hydrophobie, so daß sich auch ohne Verwendung eines Trennmittels die Folie leicht von der Unterlage ablösen läßt. Insbesondere dann jedoch, wenn die Folie sehr dünn ist, was zweckmäßig ist, um die erwünschten Ledereigenschaften durch Aufbringen der Folie nicht zu beeinträchtigen, und wenn die Oberfläche der Unterlage ein sehr feines Prägemuster aufweist, welches eine sehr feine Narbung auf der Sichtseite der Folie ergibt, besteht jedoch die Gefahr, daß sich die verfestigte Folie in unerwünschter Weise von der aus Silikonkautschuk bestehenden Unterlage ablöst oder zumindest auf dieser Unterlage verschiebt, wodurch das Auflegen des mit dem Klebemittel versehenen Spaltleders auf die Folie erschwert oder sogar verunmöglicht wird oder eine Faltenbildung der Folie entsteht. Vor allem dann, wenn die Folie aus einer Kunststoffdispersion gebildet ist, ist infolge der Hydrophobie des Silikonkautschuks die Gefahr eines Ablösers der Folie von der Unterlage, noch bevor das Spaltleder mit der Folie in Verbindung gebracht wird, sehr groß. Dazu kommt, daß, um ein rasches Verfestigen der Folie auf der Unterlage zu bewirken, zusätzlich zur Beheizung der Unterlage noch Ventilatoren eingesetzt werden, wobei durch den dabei entstehenden Luftzug die verfestigte Folie, insbesondere wenn sie dünn ist, von der Unterlage abgehoben wird.

Es ist Aufgabe der vorliegenden Erfindung, diese Nachteile zu vermeiden und die mit einer aus Silikonkautschuk oder Silikonharz bestehenden Oberfläche versehene Unterlage so auszubilden, daß zwar ein Ablösen des mit einem Überzug versehenen Trägerkörpers von der Unterlage ohne zusätzliche Maßnahmen, insbesondere ohne Aufbringen eines Trennmittels auf die Unterlage, erfolgen kann, daß jedoch ein unerwunschtes Ablösen der verfestigten Folie von der Unterlage vermieden wird. Zur Lösung dieser Aufgabe dienen die Merkmale der kennzeichnenden Teile der Ansprüche 1 oder 2. Durch die mikroskopische Rauheit der Oberfläche der Unterlage wird die Haftfähigkeit derselben so weit erhöht, daß auch dünne und daher leichte Folien, die nicht infolge ihres Eigengewichtes fest auf der Unterlage sitzen, sowie Folien aus einem Material, dessen Haftfähigkeit auf einer Unterlage mit einer Oberfläche aus Silikonkautschuk oder Silikonharz gering ist, während des Auflegens des Spaltleders auf der Unterlage unverrückbar gehalten werden, so daß hiedurch das Entstehen von Oberflächenfehlern verhindert wird.

Wenn zumindest der der Oberfläche benachbarte Bereich der Unterlage elektrisch leitfähig ist und auf einem vorbestimmten elektrischen Potential, vorzugsweise auf Nullpotential, gehalten ist, wird insbesondere dann, wenn das Beschichtungsmaterial statisch aufgeladen auf die Unterlage aufgetragen wird, die aus diesem Beschichtungsmaterial gebildete Folie von der Unterlage, welche zwecks rascherer Festigung des Beschichtungsmateriales zweckmäßig beheizt ist, angezogen. Dadurch haftet die aus dem Beschichtungsmaterial gebildete Folie auf der Unterlage so fest, daß die Unterlage bewegt, verschwenkt, ja sogar gewendet werden kann, ohne daß sich die Folie von der Unterlage abhebt, und zwar auch dann, wenn als Beschichtungsmaterial wässerige Dispersionen oder Emulsionen verwendet werden.

Die mikroskopische Rauheit der Oberfläche der Unterlage sowie die elektrische Leitfähigkeit des der Oberfläche der Unterlage benachbarten Bereiches können auf verschiedene Weise erzielt werden. So können beispielsweise zumindest in dem der Oberfläche benachbarten Bereich der Unterlage Füllstoffe eingebettet sein, wodurch die Oberfläche mikroskopisch rauh wird. Diese Füllstoffe müssen aus einem Material bestehen, dessen Eigenschaften sich beim Vermengen mit dem Silikonkautschuk oder Silikonharz nicht ändern und die einen Verklebungs- bzw. Hafteffekt mit sich bringen. Es handelt sich hiebei somit um zusätzliche Füllstoffe neben den in der Regel bereits im Silikonkautschuk oder Silikonharz vorhandenen Füllstoffen wie beispielsweise Silikate oder Tonpulver, welche keinen Verklebungs- bzw. Hafteffekt bewirken.

Derartige Füllstoffe können beispielsweise aus organischen staubförmigen Substanzen, z.B. Ledermehl, Holzmehl, Wollmehl, Zellulosemehl, Kunststoffpulver, Graphit oder Ruß, bestehen. Die Verwendung von Graphit oder Ruß als Füllstoff bewirkt gleichzeitig, daß die Unterlage in dem mit diesem Füllstoff versehenen Bereich elektrisch leitfähig wird.

Bei Verwendung von Kunststoffpulver als Füllstoff ist es erforderlich, ein Kunststoffmaterial zu verwenden, das bei einer Erwärmung der Unterlage auf eine Temperatur von ca. 120°C, wie dies beim Betrieb der erfindungsgemäßen Vorrichtung der Fall ist, weder herausgelöst noch zerstört wird. Das verwendete Kunststoffmaterial darf bei der erwähnten Temperatur auch nicht ausgeprägt plastisch werden, da sonst auch die Unterlage weicher wird und dann die Abdrücke des Leders auf der Unterlage sichtbar bleiben. Dieser Effekt tritt vor allem dann auf, wenn die gesamte Unterlage ein thermoplastisches Kunststoffpulver, wie beispielsweise PVA, in einer Menge von mehr als 12 Vol.-% enthält.

Als Füllstoff kann aber auch Metallpulver, z.B. Aluminiumpulver, verwendet werden, wodurch gleichfalls sowohl eine mikroskopische Rauheit der Oberfläche der Unterlage als auch eine elektrische Leitfähigkeit der Unterlage in dem mit dem Metallpulver versehenen Bereich erzielt wird.

Es können aber auch die Füllstoffe aus Mikrohohlkugeln bestehen. Zweckmäßig werden solche Mikrohohlkugeln verwendet, deren dünne Hülle aus Vinylidenchlorid-Copolymerisat oder aus Phenolharz gebildet ist.

Weiters können die Füllstoffe aus Feststoffen bestehen, die in die gasförmige Phase sublimieren und dabei Poren bilden, welche die mikroskopische Rauheit bewirken.

Besonders geeignet sind Füllstoffe mit maximalen Abmessungen zwischen, 0,1 und 100μm, welche die gewünschte mikroskopische Rauheit sicherstellen.

Die Füllstoffe können weiters aus Kohlenfäden und/oder Metallfäden bestehen. Mit diesem Füllstoffen läßt sich zwar keine mikroskopische Rauheit der Oberfläche der Unterlage, jedoch die gewünschte elektrische Leitfähigkeit erzielen. Diese elektrische Leitfähigkeit kann auch dadurch bewirkt werden, daß als Füllstoffe entsprechende flüssige oder pastöse Substanzen, wie beispielsweise hochmolekulare Polyglykoläther, verwendet werden.

Schließlich ist es von Vorteil, wenn die Füllstoffe aus wasseranziehenden Substanzen, wie beispielsweise Natriumchlorid oder Polyglykolen, bestehen. Diese Füllstoffe bewirken zumindest teilweise gleichfalls eine mikroskopische Rauheit der Oberfläche der Unterlage, durch diese Füllstoffe wird aber vor allem die Hydrophobie der Oberfläche des Silikonkautschuks oder Silikonharzes zumindest abgeschwächt, so daß bei Verwendung von wässerigen Kunststoffdispersionen als Beschichtungsmaterial, wie dies aus Gründen des Umweltschutzes vorteilhaft ist, die Oberflächenspannung auf der Unterlage verringert und hiedurch unerwünschte Perlbildung beim Aufbringen des Beschichtungsmateriales auf die Unterlage unterbunden wird.

Zweckmäßig ist es, wenn die Füllstoffe in einer Menge zwischen 1 bis 40 Vol.-% zumindest in dem der Oberfläche benachbarten Bereich angeordnet sind.

Wird die mikroskopische Rauheit durch die Einbettung von Füllstoffen in den der Oberfläche der Unterlage benachbarten Bereich erzielt, so ist diese mikroskopische Rauheit bei einer mindestens 500-fachen Vergrößerung bereits erkennbar.

Eine andere Möglichkeit, der Oberfläche der Unterlage die erforderliche mikroskopische Rauheit zu verleihen, ist es, diese Oberfläche einer mechanischen und/oder physikalischen bzw. elektrischen und/oder chemischen Oberflächenbehandlung zu unterziehen. Eine solche Oberflächenbehandlung bewirkt eine Veränderung der Oberfläche der Unterlage, wodurch die mikroskopische Rauheit erzielt wird. Besonders vorteilhaft ist es, sowohl Füllstoffe in die Unterlage, zumindest im Bereich von deren Oberfläche, einzubetten, als auch eine Oberflächenbehandlng durchzuführen. Bei einer mechanischen und/oder chemischen Oberflächenbehandlung werden dadurch die Füllstoffe, welche in das Material der Unterlage eingebettet sind, zum Teil freigelegt, wodurch die erforderliche Rauheit der Oberfläche in stärkerem Maße gegeben ist. Werden beispielsweise die erwähnten Mikrohohlkugeln als Füllstoffe verwendet, so werden zumindest einige dieser unmittelbar der Oberfläche benachbart angeordneten Mikrohohlkugeln durch eine mechanische Oberflächenbehandlung, z.B. durch Zusammenpressen, oder durch eine chemische Oberflächenbehandlung zum Teil zerstört bzw. geöffnet, so daß die Oberfläche der Unterlage dadurch rauher wird.

Wird die Oberfläche der Unterlage einer mechanischen Oberflächenbehandlung unterzogen, so kann diese Oberfläche beispielsweise mit einer Mikroperforation versehen sein.

Es kann aber auch die Oberfläche der Unterlage, beispielsweise mittels einer Gasflamme, beflammt sein. Dadurch entstehen an der Oberfläche quasi Radikale, d.h. es wird die Molekülkette des die Unterlage bildenden Stoffes aufgebrochen, wodurch eine Haftung auf chemisch-physikalischem Wege bewirkt wird. Wird eine mit eingebetteten Füllstoffen versehene Oberfläche der Unterlage beflammt, so erfolgt hiedurch aber auch ein Öffnen dieser Oberfläche durch teilweises Verbrennen oder Verkohlen der Füllstoffe, wodurch gleichfalls eine mikroskopische Rauheit dieser Oberfläche bewirkt wird. Ähnliche Resultate bei gleichzeitiger Verwendung von Füllstoffen ergeben sich dann, wenn die Oberfläche der Unterlage einer Behandlung durch elektrische Funkenentladung (Cor-ona-Entladung) ausgesetzt ist. Bei gleichzeitiger Verwendung organischer Füllstoffe in dem der Oberfläche der Unterlage benachbarten Bereich ergibt sich eine mikroskopische Rauheit, die bei einer zumindest 1000-fachen Vergrößerung erkennbar ist.

Außerdem kann die Oberfläche der Unterlage, z.B. mittels Laserstrahlen, bestrahlt sein bzw. mit einem Lösungsmittel, z.B. Dimethylformamid oder Benzol, behandelt sein. Durch chemische oder elektrochemische Behandlung der Oberfläche der Unterlage entsteht eine Veränderung des Werkstoffes, welche als Korrosion im weitesten Sinne bezeichnet werden kann und welche durch winzige Krater an der Oberfläche gekennzeichnet ist, wodurch die gewünschte mikroskopische Rauheit der Oberfläche erzielt wird.

Wird die mikroskopische Rauheit der Oberfläche der Unterlage lediglich durch eine physikalische bzw. elektrische oder elektrochemische Behandlung erreicht, also beispielsweise durch Beflammen, oder durch Behandlung mittels Laserstrahlen, so ist die mikroskopische Rauheit in der Regel erst bei einer zumindest 1500-fachen Vergrößerung erkennbar. Es ist aber auch hier eine Verbesserung der Haftung der auf der Unterlage gebildeten Folie auf dieser Unterlage um mindestens 20% erzielbar.

Eine Vorbehandlung von Kunststoffolien, beispielsweise Polyäthylenfolien, durch Beflammen, sowie eine chemische Vorbehandlung sind bereits bekannt, um durch Oxydation oder Bildung von Doppelbindungen die unipolaren Oberflächen zu aktivieren und Adhäsionskräfte zu bilden, die ein späteres Bedrucken, Lackieren oder Bekleben der Folie mit Abziehbildern ermöglichen. Diese bekannten Behandlungsmethoden können auch für die Behandlung der Oberfläche der Unterlage zur Erzielung des angestrebten Effektes herangezogen werden.

Ein besonders schönes und ansprechendes Aussehen des mittels der erfindungsgemäßen Vorrichtung zugerichteten Spaltleders wird dann erzielt, wenn die Oberfläche der Unterlage eine Naturledernarbenstruktur aufweist, deren Gestalt sich auf einer Fläche von zumindest 1,2 m² mindestens einmal ohne störende Übergänge an den Stoßstellen wiederholt. Während größere Stücke von vollnarbigem Naturleder in Oberflächenbeschaffenheit und Aussehen starke Schwankungen aufweisen, welche störend wirken, tritt dieser Nachteil im vorliegenden Fall nicht auf. Die Herstellung einer solchen Oberfläche ist z.B. in der DE—C—3405985 beschrieben.

Weiters ist es zweckmäßig, wenn die Oberfläche der Unterlage eine geringere elektrische Leitfähigkeit aufweist als der Bereich unterhalb der Oberfläche. Wird nämlich die elektrische Leitfähigkeit durch Beimengung von farbabgebenden Füllstoffen wie beispielsweise Ruß oder Graphit erzielt, so besteht, wenn die Menge dieser Füllstoffe an der Oberfläche groß ist, die Gefahr eines Abfärbens dieser Füllstoffe auf das aufgetragene flüssige Beschichtungsmaterial, so daß die daraus gebildete Folie nicht den gewünschten Farbton besitzt.

Damit die Oberfläche eine geringere elektrische Leitfähigkeit aufweist, also einen geringeren Anteil von diese elektrische Leitfähigkeit bewirkenden Füllstoffen besitzt, kann die Unterlage oben mit einem dünnen Überzug versehen sein, der diese geringere elektrische Leitfähigkeit besitzt. Dadurch werden Farbwechselerscheinungen beim aufgetragenen Beschichtungsmaterial unterbunden.

Die Unterlage kann einstückig aus Silikonkautschuk oder Silikonharz ausgebildet sein. Zweckmäßig ist es jedoch, wenn die Unterlage aus mehreren, parallel zur Oberfläche angeordneten Schichten besteht, wobei lediglich die oberste Schicht aus Silikonkautschuk oder Silikonharz besteht. Es genügt hiebei, wenn auch die Füllstoffe nur in der obersten Sicht angeordnet sind, um die mikroskopische Rauheit der Oberfläche und/oder die elektrische Leitfähi-gkeit durch die Füllstoffe zu erzielen.

Die unterste Schicht kann beispielsweise aus einem Papierträger bestehen, der gleichfalls elektrisch leitfähig gemacht werden kann.

Vorteilhaft ist es, wenn die Unterlage mit einer Verstärkungsanordnung versehen ist, wodurch eine Verstärkung der Unterlage und eine Begrenzung der Wärmedehnung beim Erwärmen der Unterlage erzielt wird. Diese Verstärkungsanordnung kann in die Unterlage eingebettet sein, kann aber auch an der Unterseite der Unterlage angeordnet und mit dieser zumindest stellenweise, vorzugsweise durch Kleben, verbunden sein.

Die Verstärkungsanordnung besteht zweckmäßig aus einem Vlies oder Gewebe, vorzugsweise aus einem Glasfaservlies oder Glasfasergewebe, kann aber auch aus Metalldrähten, beispielsweise Aluminiumdrähten, und/oder aus Kohlefasern bestehen, wobei die Drähte oder Fasern gitterförmig angeordnet sind. Die Verwendung von Metalldrähten bzw. Kohlefasern bringt den Vorteil mit sich, daß diese zusätzlich zum Anschluß eines elektrischen Leiters herangezogen werden können, um den elektrisch leitfähigen Bereich der Unterlage auf dem vorbestimmten elektrischen Potential zu halten.

Weiters ist es möglich, die Verstärkungsanordnung aus einem dünnen Metallträger, beispielsweise aus Aluminiumblech, zu bilden, welcher dann zweckmäßig an der Unterseite der Unterlage befestigt ist.

Wie bereits erwähnt, ist die elektrisch leitfähige Ausbildung der Unterlage insbesondere dann von Vorteil, wenn das Beschichtungsmaterial beim Aufbringen auf die Unterlage statisch aufgeladen ist. Zu diesem Zweck ist erfindungsgemäß oberhalb der Unterlage eine elektrostatische Sprühvorrichtung zum Auftragen des flüssigen Beschichtungsmateriales auf die elektrisch leitfähige und auf Nullpotential gehaltene Unterlage angeordnet. Eine solche Ausbildung bringt den zusätzlichen Vorteil mit sich, daß das versprühte flüssige Beschichtungsmaterial von der Unterlage angezogen wird und sich auf ihr ohne nennenswerte Sprühverluste niederschlägt. Zweckmäßig ist es hiebei, wenn die elektrostatische Sprühvorrichtung ortsfest angeordnet ist und die Unterlage unterhalb der elektrostatischen Sprühvorrichtung seitlich verschiebbar ist, also unterhalb dieser Sprühvorrichtungdurchläuft. In diesem Fall läßt sich insbesondere dann, wenn die Unterlage aus einem endlosen Band besteht, ein kontinuierliches Aufbringen des Beschichtungsmateriales auf die Unterlage erzielen.

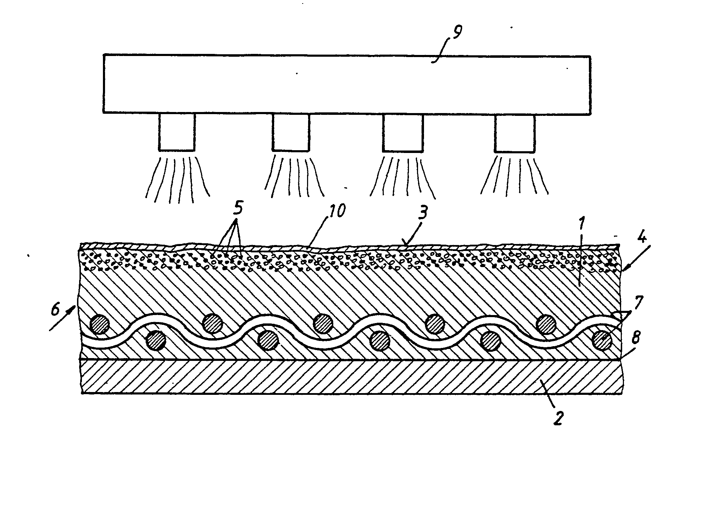

In der einzigen Zeichnungsfigur ist eine erfindungsgemäße Vorrichtung gezeigt, wobei die Unterlage im Querschnitt dargestellt ist.

Die in der Zeichnung dargestellte Unterlage 1 besteht aus Silikonkautschuk oder Silikonharz und ist an ihrer Unterseite mit einem Träger 2 aus Aluminiumblech verbunden. Es kann aber auch die Unterlage 1 aus mehreren Schichten bestehen, wobei lediglich die oberste Schicht aus Silikonkautschuk oder Silikonharz gebildet ist.

Die Oberfläche 3 der Unterlage 1 weist vorzugsweise ein Prägemuster in Form einer negativen Naturledernarbenstruktur auf, so daß die durch Aufbringen von flüssigem Beschichtungsmaterial auf die Unterlage 1 gebildete Folie an ihrer Sichtseite ein naturledernarbenähnliches Aussehen besitzt.

Zusätzlich zu diesem Prägemuster ist die Oberfläche 3 mit einer mikroskopischen Rauheit versehen. Diese mikroskopische Rauheit kann dadurch bewirkt werden, daß in die der Oberfläche 3 benachbarte Schicht 4 der Unterlage 1 Füllstoffe 5 eingebettet werden, wogegen dieSchicht 6 keine solchen Füllstoffe aufweist. Als Füllstoffe kommen vor allem organische staubförmige Substanzen, z.B. Ledermehl, Holzmehl, Wollmehl, Zellulosemehl oder Kunststoffpulver, Graphit, Ruß, weiters Metallpulver, z.B. Aluminiumpulver, aber auch Mikrohohlkugeln, in Frage, deren dünne Hülle aus Vinylidenchlorid-Copolymerisat oder aus Phenolharz gebildet ist. Zusätzlich zu diesen Füllstoffen oder aber auch anstelle der Anordnung der Füllstoffe 5 kann die Oberfläche 3 mechanisch, physikalisch bzw. elektrisch oder chemisch bzw. elektrochemisch behandelt sein, und zwar beispielsweise durch Beflammen, durch Behandeln durch elektrische Funkenentladung, durch Bestrahlen mittels Laserstrahlen, aber auch durch Behandlung mittels eines Lösungsmittels. Werden Mikrohohlkugeln als Füllstoffe verwendet, und erfolgt eine mechanische Behandlung der Oberfläche der Unterlage 1, beispielsweise durch Mikroperforation oder durch Pressen, so werden die Hüllen der im Bereich der Oberfläche 3 befindlichen Mikrohohlkugeln beschädigt bzw. zerstört, wodurch kleine Vertiefungen entstehen, die die mikroskopische Rauheit bewirken. Werden Mikrohohlkugeln als Füllstoffe 5 verwendet und wird die Oberfläche 3 durch ein Lösungsmittel, beispielsweise Toluol, behandelt, so werden durch diese Lösungsmittel einerseits die dünnen Hüllender Mikrohohlkugeln zerstört, andererseits wirkt dieses Lösungsmittel als Quellmittel für den Silikonkautschuk oder das Silikonharz, so daß die Oberfläche 3 anquillt. Nach dem Verdampfen des Lösungs- bzw. Quellmittels stellt sich die Unterlage 1 wieder auf ihre ursprünglichen Abmessungen ein, wobei sich dort, wo die dünnen Hüllen der Mikrohohlkugeln zerstört wurden, mikroskopische kleine Vertiefungen gebildet haben, die die mikroskopische Rauheit bewirken.

Auch dann, wenn keine Oberflächenbehandlung erfolgt, wird durch die Füllstoffe 5, welche teilweise im unmittelbaren Bereich der Oberfläche 3 angeordnet sind, die mikroskopische Rauheit erzielt. Außerdem bewirken diese Füllstoffe, wenn sie aus einem entsprechenden Material bestehen, das einen Haftund Klebeffekt besitzt, eine Verbesserung der Haftung der auf der Unterlage gebildeten Folie. Es hat sich gezeigt, daß im Vergleich zu einer Unterlage aus Silikonkautschuk oder Silikonharz ohne Füllstoffe und/oder ohne Oberflächenbehandlung durch die erfindungsgemäße Ausbildung eine Verbesserung der Haftfähigkeit um mehr als 20 % erfolgt.

Enthält die Unterlage 1 keine Füllstoffe, sondern ist lediglich die Oberfläche 3 einer physikalischen bzw. elektrischen Behandlung unterzogen worden, so ist die mikroskopische Rauheit sehr gering und nur bei sehr starker Vergrößerung erkennbar, da die Veränderung der Oberfläche 3 der Unterlage 1 im molekularen Bereich erfolgt. Dennoch ist auch hier eine Verbesserung der Haftfähigkeit um mindestens 20 % erzielbar.

Werden als Füllstoffe Graphit oder Ruß verwendet, so wird die Unterlage in jener Schicht, die diese Füllstoffe aufweist, elektrisch leitfähig. Diese elektrische Leitfähigkeit kann aber auch auf andere Weise, beispielsweise durch Einbettung von Kohlefäden und/oder Metallfäden oder durch Beimengung von die elektrische Leitfähigkeit bewirkenden flüssigen oder pastösen Substanzen, wie beispielsweise hochmolekularen Polyglykoläthern, bewirkt werden. Wird diese elektrisch leitfähige Schicht geerdet und wird das flüssige Beschichtungsmaterial durch eine oberhalb der Unterlage 1 angeordnete elektrostatische Sprühvorrichtung 9 auf die Oberfläche der Unterlage aufgesprüht, so erfolgt hiedurch eine weitere Verbesserung der Haftung der aus diesem Beschichtungsmaterial gebildeten Folie auf der Unterlage 1.

Befinden sich in der obersten Schicht 4 große Mengen von Graphit oder Ruß, um die gewünschte elektrische Leitfähigkeit zu erhalten, so besteht die Gefahr eines Abfärbens auf das flüssige Beschichtungsmaterial und daher eines Farbwechsels der daraus gebildeten Folie. Um diese Gefahr zu beseitigen, kann die Unterlage oben mit einem dünnen Überzug 10 versehen sein, der eine geringere elektrische Leitfähigkeit aufweist und daher weniger Füllstoffe besitzt.

Es ist auch möglich, als Füllstoffe wasseranziehende Substanzen, wie beispielsweise Natriumchlorid, Polyamid oder Polyglykole zu verwenden, wodurch die Hydrophobie des Silikonkautschuks oder Silikonharzes teilweise beseitigt wird und hiedurch eine weitere Verbesserung der Haftung dann erzielt wird, wenn als Beschichtungsmaterial wässerige Kunststoffdispersionen verwendet werden.

In der Unterlage 1 ist eine Verstärkungsanordnung angeordnet, um eine Verstärkung der Unterlage zu erzielen und die beim Erwärmen der Unterlage auftretenden Wärmedehnungen zu begrenzen. Diese Verstärkungsanordnung kann aus einem Glasfaservlies oder Glasfasergewebe bestehen, aber auch aus gitterförmig angeordneten Metalldrähten oder Kohlefäden. Die Verwendung von Metalldrähten oder Kohlefäden ist dann vorteilhaft, wenn als Füllstoffe solche verwendet werden, die eine elektrische Leitfähigkeit bewirken, da dann diese Teile an einen nicht dargestellten elektrischen Leiter angeschlossen werden können, über welchen die elektrisch leitfähige Unterlage auf einem vorbestimmten elektrischen Potential gehalten wird, beispielsweise durch Erdnung auf Nullpotential. Selbstverständlich muß in diesem Fall die aus den Metalldrähten oder Kohlefäden bestehende Einlage in jener Schicht angeordnet sein, in der sich die die elektrische Leitfähigkeit bewirkenden Füllstoffe befinden. Die Unterlage 1 ist mit einem Träger 2 beispielsweise aus Papier oder aus Aluminiumblech verbunden. Die Verbindung erfolgt hiebei durch partielle Verklebung, so daß unterschiedliche Wärmedehnungen nicht zu einem Ablösen der Unterlage 1 vom Träger 2 führen können.

Die aus Metalldrähten oder Kohlefäden gebildete Verstärkungsanordnung 7 kann auch als elektrische Widerstandsheizung für die Erwärmung der Unterlage 1 herangezogen werden.

Die Unterlage 1 weist beispielsweise eine Dicke von 1,5 bis 5 mm auf, ist somit in der Zeichnung vergrößert dargestellt.

Die Unterlage 1 kann ferner an ihrer Oberfläche 3 mit nach oben abstehenden dünnen Zäpfchen versehen sein, welche gleichfalls aus Silikonkautschuk oder Silikonharz bestehen. Die Höhe dieser dünnen Zäpfchen beträgt weniger als 0,5 mm, ihr Durchmesser weniger als 0,3 mm. Zweckmäßig sind auf einer Fläche von 1 cm² mindestens sechs solcher dünner Zäpfchen angeordnet. Die Anordnung dieser dünnen Zäpfchen bringt den Vorteil mit sich, daß die durch Verfestigung des flüssigen Beschichtungsmateriales auf der Unterlage 1 gebildete Folie an jenen Stellen, wo sich die dünnen Zäpfchen befinden, Perforierungen aufweist, wodurch die Luft- und Wasserdampfdurchlässigkeit dieser Folie und dadurch des zugerichteten Leders erhöht wird.

Die erfindungsgemäße Vorrichtung eignet sich optimal zum Zurichten von Spaltleder, weil damit nicht nur die bekannten Probleme, die sich aus der Hydrophobie des Silikonkautschuk- bzw. Silikonharzmaterials ergeben, lösen lassen, sondern auch einerseits ein optimales Auftragen des Beschichtungsmateriales auf die Unterlage ohne nennenswerte Verluste ermöglicht wird, und andererseits die gewünschte Haftung der aus dem Beschichtungsmaterial gebildeten Folie auf der Unterlage gewährleistet ist, so daß die Unterlage zusammen mit der darauf befindlichen Folie sämtliche Bewegungsabläufe bei der Produktion des zugerichteten Spaltleders mitzumachen imstande ist, ohne sich hiebei von der Unterlage zu lösen.

Als Beschichtungsmaterial kommen nicht nur Kunststoff- bzw. Elastomerdispersionen und/oder -lösungen in Frage, sondern beispielsweise auch Lacke oder Farben, also alle jene Produkte, die auch bisher mit elektrostatischen Sprühvorrichtungen auf eine Unterlage aufgetragen werden konnten.

Beispiel: Folgender Versuch wurde durchgeführt: Eine übliche Unterlage aus Silikonkautschuk oder Silikonharz wird geteilt, Die Oberfläche des einen Teiles bleibt unbehandelt, die Oberfläche des anderen Teiles wird durch Beflammen mit einer Gasflamme behandelt. Anschließend wird auf die Oberfläche beider Teile eine Kunststoffdispersion aufgebracht. Beim unbehandelten Teil perlt die aufgebrachte Kunststoffdispersion sofort nach dem Aufbringen auf die Oberfläche, beim durch Beflammen behandelten Teil neigt die Dispersion kaum zum Perlen, so daß der aufgebrachte flüssige Film ohne zusätzliche Maßnahmen, beispielsweise auch ohne Erwärmung, in einen festen Film übergeführt wird, wogegen beim unbehandelten Teil solche zusätzlichen Maßnahmen erforderlich sind. Die Verbesserung der Haftung des verfestigten Films am behandelten Teil beträgt gegenüber der Haftung des verfestigten Films am unbehandelten Teil mehr als 20%.

**Patentansprüche**

1. Vorrichtung zur Herstellung eines Überzuges auf einem flächenhaften Trägerkörper, insbesondere zum Zurichten von Leder, vorzugsweise Spaltleder, oder Substraten mit auf zumindest einer Seite faseriger Oberfläche, mit einer Unterlage (1) mit einer aus Silikonkautschuk oder Silikonharz bestehenden Oberfläche (3), auf die ein flüssiges Beschichtungsmaterial zur Herstellung einer nach Verfestigung die Sichtseite des Überzuges bildenden Folie aufgetragen wird, wobei die Oberfläche (3) der Unterlage (1) vorzugsweise mit einem prägemuster, z.B. mit einer Naturledernarbenstruktur, versehen ist, dadurch gekennzeichnet, daß die Oberfläche (3) der Unterlage (1), bei Anordnung eines Prägemusters zusätzlich zu diesem, mit einer mikroskopischen Rauheit versehen ist.

2. Vorrichtung zur Herstellung eines Überzuges auf einem flächenhaften Trägerkörper, insbesondere zum Zurichten von Leder, vorzugsweise Spaltleder, oder Substraten mit auf zumindest einer Seite faseriger Oberfläche, mit einer Unterlage (1) mit einer aus Silikonkautschuk oder Silikonharz bestehenden Oberfläche (3), auf die ein flüssiges Beschichtungsmaterial zur Herstellung einer nach Verfestigung die Sichtseite des Überzuges bildenden Folie aufgetragen wird, wobei die Oberfläche (3) der Unterlage (1) vorzugsweise mit einem Prägemuster, z.B. mit einer Naturledernarbenstruktur, versehen ist, dadurch gekennzeichnet, daß zumindest der der Oberfläche (3) benachbarte Bereich (4) der Unterlage (1) elektrisch leitfähig ist und auf einem vorbestimmten elektrischen Potential, insbesondere auf Nullpotential, gehalten ist.

3. Vorrichtung nach Anspruch 1 oder 2, dadurch gekennzeichnet, daß zumindest in dem der Oberfläche (3) benachbarten Bereich (4) der Unterlage (1) Füllstoffe (5) eingebettet sind.

4. Vorrichtung nach Anspruch 3, dadurch gekennzeichnet, daß die Füllstoffe aus organischen staubförmigen Substanzen, z.B. Ledermehl, Holzmehl, Wollmehl, Zellulosemehl, Kunststoffpulver, Graphit oder Ruß bestehen.

5. Vorrichtung nach Anspruch 3, dadurch gekennzeichnet, daß die Füllstoffe (5) aus Metallpulver, z.B. Aluminiumpulver, bestehen.

6. Vorrichtung nach den Ansprüchen 1 und 3, dadurch gekennzeichnet, daß die Füllstoffe (5) aus Mikrohohlkugeln bestehen.

7. Vorrichtung nach den Ansprüchen 1 und 3, dadurch gekennzeichnet, daß die Füllstoffe aus Feststoffen bestehen, die in die gasförmige Phase sublimieren und dabei Poren bilden.

8. Vorrichtung nach einem der Ansprüche 3 bis 7, dadurch gekennzeichnet, daß die Füllstoffe (5) maximale Abmessungen zwischen, 0,1 und 100μm aufweisen.

9. Vorrichtung nach den Ansprüchen 2 und 3, dadurch gekennzeichnet, daß die Füllstoffe (5) aus Kohlefäden und/oder Metallfäden bestehen.

10. Vorrichtung nach den Ansprüchen 2 und 3, dadurch gekennzeichnet daß die Füllstoffe (5) aus die elektrische Leitfähigkeit bewirkenden flüssigen oder pastösen Substanzen, wie beispielsweise hochmolekularen Polyglykoläthern, bestehen.

11. Vorrichtung nach Anspruch 3, dadurch gekennzeichnet, daß die Füllstoffe (5) aus wasseranziehenden Substanzen, wie beispielsweise Natriumchlorid, Polyamid, Polyglykolen, bestehen.

12. Vorrichtung nach einem der Ansprüche 1 bis 11, dadurch gekennzeichnet, daß die Füllstoffe (5) in einer Menge zwischen 1 bis 40 Vol-% zumindest in dem der Oberfläche (3) benachbarten Bereich (4) angeordnet sind.

13. Vorrichtung nach einem der Ansprüche 1 bis 12, dadurch gekennzeichnet, daß die Oberfläche (3) der Unterlage (1) einer mechanischen und/oder physikalischen bzw. elektrischen und/oder chemischen Oberflächenbehandlung unterzogen ist.

14. Vorrichtung nach Anspruch 13, dadurch gekennzeichnet, daß die Oberfläche (3) der Unterlage (1) mit einer Mikroperforation versehen ist.

15. Vorrichtung nach Anspruch 13, dadurch gekennzeichnet, daß die Oberfläche (3) der Unterlage (1) beflammt ist.

16. Vorrichtung nach Anspruch 13, dadurch gekennzeichnet, daß die Oberfläche (3) der Unterlage (1) einer Behandlung durch elektrische Funkenentladung ausgesetzt ist.

17. Vorrichtung nach Anspruch 13, dadurch gekennzeichnet, daß die Oberfläche (3) der Unterlage (1), z.B. mittels Laserstrahlen, bestrahlt ist.

18. Vorrichtung nach Anspruch 13, dadurch gekennzeichnet, daß die Oberfläche (3) der Unterlage (1) mit einem Lösungsmittel, z.B. Dimethylformamid oder Benzol, behandelt ist.

19. Vorrichtung nach einem der Ansprüche 1 bis 18, dadurch gekennzeichnet, daß die Oberfläche (3) der Unterlage (1) eine Naturledernarbenstruktur aufweist, deren Gestalt sich auf einer Fläche von zumindest 1,2 m² mindestens einmal ohne störende Übergänge an den Stoßstellen wiederholt.

20. Vorrichtung nach einem der Ansprüche 1 bis 19, dadurch gekennzeichnet, daß die Oberfläche (3) der Unterlage (1) eine geringere elektrische Leitfähigkeit aufweist als der Bereich unterhalb der Oberfläche (3).

21. Vorrichtung nach einem der Ansprüche 1 bis 20, dadurch gekennzeichnet, daß die Unterlage (1) oben mit einem dünnen Überzug (10) versehen ist.

22. Vorrichtung nach einem der Ansprüche 1 bis 21, dadurch gekennzeichnet, daß die Unterlage (1) aus mehreren, parallel zur Oberfläche (3) angeordneten Schichten (4, 6) besteht, wobei lediglich die oberste Schicht (4) aus Silikonkautschuk oder Silikonharz besteht.

23. Vorrichtung nach Anspruch 22, dadurch gekennzeichnet, daß die Füllstoffe (5) nur in der obersten Schicht (4) angeordnet sind.

24. Vorrichtung nach Anspruch 22, dadurch gekennzeichnet, daß die unterste Schicht (2) aus einem Papierträger besteht.

25. Vorrichtung nach einem der Ansprüche 1 bis 24, dadurch gekennzeichnet, daß die Unterlage (1) mit einer Verstärkungsanordnung (2, 7) versehen ist.

26. Vorrichtung nach Anspruch 25, dadurch gekennzeichnet, daß die Verstärkungsanordnung (7) in die Unterlage eingebettet ist.

27. Vorrichtung nach Anspruch 25, dadurch gekennzeichnet, daß die Verstärkungsanordnung als unterste Schicht (2) an der Unterseite

7

der Unterlage (1) angeordnet ist und mit dieser zumindest stellenweise, vorzugsweise durch Kleben (bei 8), verbunden ist.

28. Vorrichtung nach Anspruch 25 und 26 oder 27, dadurch gekennzeichnet, daß die Verstärkungsanordnung (7) aus einem Vlies oder Gewebe, vorzugsweise aus einem Glasfaservlies oder Glasfasergewebe, besteht.

29. Vorrichtung nach Anspruch 25 und 26 oder 27, dadurch gekennzeichnet, daß die Verstärkungsanordnung (7) aus Metalldrähten, beispielsweise Aluminiumdrähten, und/oder aus Kohlefasern besteht, wobei die Drähte bzw. Fasern vorzugsweise gitterförmig angeordnet sind.

30. Vorrichtung nach Anspruch 25 und 26 oder 27, dadurch gekennzeichnet, daß die Verstärkungsanordnung (2) aus einem 'dünnen Metallträger, beispielsweise als Aluminiumblech, besteht.

31. Vorrichtung nach einem der Ansprüche 1 bis 30, dadurch gekennzeichnet, daß die Oberfläche (3) der Unterlage (1) mit nach oben abstehenden dünnen Zäpfchen versehen ist.

32. Vorrichtung nach einem der Ansprüche 1 bis 31, dadurch gekennzeichnet, daß oberhalb der Unterlage (1) eine elektrostatische Sprühvorrichtung (9) zum Auftragen des flüssigen Beschichtungsmateriales auf die Unterlage (1) angeordnet ist.

33. Vorrichtung nach Anspruch 32, dadurch gekennzeichnet, daß die Unterlage (1) unterhalb der elektrostatischen Sprühvorrichtung (9) seitlich verschiebbar angeordnet ist.

**Revendications**

1. Dispositif pour la fabrication d'un revêtement sur un corps porteur en forme de surface, en particulier pour corroyer du cuir, et de préférence du cuir refendu, ou sur des substrats dont la surface est fibreuse sur au moins un côté, comprenant un substrat (1) présentant une surface (3) constituée de caoutchouc au silicone ou de résine au silocone sur laquelle on applique un produit d'enduction liquide pour fabriquer une feuille qui forme après solidification la face visible du revêtement, la surface (3) du substrat (1) étant pourvue de préférence d'un dessin estampé présentant par exemple la structure du grain du cuir naturel, caractérisé par le fait que la surface (3) du substrat (1) est pourvue d'une rugosité microscopique qui vient en supplément d'un dessin estampé lorsque celui-ci est présent.

2. Dispositif pour la fabrication d'un revêtement sur un corps porteur en forme de surface, en particulier pour corroyer du cuir, et de préférence du cuir refendu, ou sur des substrats dont la surface est fibreuse sur au moins un côté, comprenant un substrat (1) présentant une surface (3) constituée de caoutchouc au silicone ou de résine au silicone sur laquelle on applique un produit d'enduction liquide pour fabriquer une feuille qui forme après solidification la face visible du revêtement, la surface (3) du substrat (1) étant pourvue de préférence d'un dessin estampé présentant par exemple la structure du grain du cuir naturel, caractérisé par le fait qu'au moins la région (4) du substrat (1) qui est voisine de la surface (3) est conductrice de l'électricité et qu'elle est maintenue à un potentiel électrique prédéterminé, en particulier au potentiel zéro.

3. Dispositif selon la revendication 1 ou 2, caractérisé par le fait que des matières de remplissage (5) sont noyées au moins dans la région (4) du substrat (1) qui est voisine de la surface (3).

4. Dispositif selon la revendication 3, caractérisé par le fait que les matières de remplissage sont constituées par des substances organiques pulvérulentes, par exemple de la farine de cuir, de la farine de bois, de la farine de laine, de la farine de cellulose, de la poudre de matière plastique, du graphite ou de la suie.

5. Dispositif selon la revendication 3, caractérisé par le fait que les matières de remplissage (5) sont constituées par de la poudre métallique, par exemple de la poudre d'aluminium.

6. Dispositif selon les revendications 1 et 3, caractérisé par le fait que les matières de remplissage (5) sont constituées par des microbilles creuses.

7. Dispositif selon les revendications 1 et 3, caractérisé par le fait que les matières de remplissage sont constituées par des solides qui se subliment en phase gazeuse en formant des pores.

8. Dispositif selon l'une des revendications 3 à 7, caractérisé par le fait que les matières de remplissage (5) présentent des dimensions maximales entre 0,1 et 100 µm.

9. Dispositif selon les revendications 2 et 3, caractérisé par le fait que les matières de remplissage (5) sont constituées par des fils de carbone et/ou des fils métalliques.

10. Dispositif selon les revendications 2 et 3, caractérisé par le fait que les matières de remplissage (5) sont constituées par des substances liquides ou pâteuses produisant la conductibilité électrique, comme par exemple des polyéthers de glycol à poids moléculaire élevé.

11. Dispositif selon la revendication 3, caractérisé par le fait que les matières de remplissage (5) sont constituées par des substances hydrophiles, comme par exemple du chlorure de sodium, un polyamide et des polyglycols.

12. Dispositif selon l'une des revendications 1 à 11, caractérisé par le fait que les matières de remplissage (5) sont présentes en une quantité comprise entre 1 et 40% en volume, du moins dans la région (4) voisine de la surface (3).

13. Dispositif selon l'une des revendications 1 à 12, caractérisé par le fait que la surface (3) du substrat (1) est soumise à un traitement superficiel mécanique et/ou physique ou électrique, respectivement, et/ou chimique.

14. Dispositif selon la revendication 13, caractérisé par le fait que la surface (3) du substrat (1) est munie d'une microperforation.

15. Dispositif selon la revendication 13, caractérisé par le fait que la surface (3) du substrat (1) est flambée.

16. Dispositif selon la revendication 13, caractérisé par le fait que la surface (3) du substrat (1) est soumise à un traitement par décharge d'étincelles électriques.

17. Dispositif selon la revendication 13, caractérisé par le fait que la surface (3) du substrat (1) est irradiée, par exemple au moyen de rayons laser.

18. Dispositif selon la revendication 13, caractérisé par le fait que la surface (3) du substrat (1) est traitée au moyen d'un solvant, par exemple du diméthylformamide ou du benzol.

19. Dispositif selon l'une des revendications 1 à 18, caractérisé par le fait que la surface (3) du substrat (1) présente la structure du grain du cuir naturel dont la forme se répète au moins une fois sur une surface d'au moins 1,2 m² sans transitions gênantes aux joints.

20. Dispositif selon l'une des revendications 1 à 19, caractérisé par le fait que la surface (3) du substrat (1) présente une conductibilité électrique plus faible que la région située au-dessous de la surface (3).

21. Dispositif selon l'une des revendications 1 à 20, caractérisé par le fait que le substrat (1) est muni à sa partie supérieure d'un revêtement mince (10).

22. Dispositif selon l'une des revendications 1 à 21, caractérisé par le fait que le substrat (1) se compose de plusieurs couches (4, 6) disposées parallèlement à la surface (3), seule la couche supérieure (4) étant constituée par du caoutchouc au silicone ou de la résine au silicone.

23. Dispositif selon la revendication 22, caractérisé par le fait que les matières de remplissage (5) ne sont disposées que dans la dernière couche supérieure (4).

24. Dispositif selon la revendication 22, caractérisé par le fait que la dernière couche inférieure (2) est constituée par un support en papier.

25. Dispositif selon l'une des revendications 1 à 24, caractérisé par le fait que le substrat (1) est muni d'une structure de renforcement (2, 7).

26. Dispositif selon la revendication 25, caractérisé par le fait que la structure de renforcement (7) est noyée dans le substrat.

27. Dispositif selon la revendication 25, caractérisé par le fait que la structure de renforcement (7) est disposée comme dernière couche inférieure (2) sur la face inférieure du substrat (1), et qu'elle est reliée à celui' ci, du moins par endroits, et de préférence par collage (en 8).

28. Dispositif selon la revendication 25 et 26 ou 27, caractérisé par le fait que la structure de renforcement (7) est constituée par un feutrage ou par un tissu, de préférence par un feutrage de fibres de verre ou un tissu de fibres de verre.

29. Dispositif selon la revendication 25 et 26 ou 27, caractérisé par le fait que la structure de renforcement (7) est constituée par des fils métalliques, par exemple des fils d'aluminium, et/ou par des fibres de carbone, les fils ou les fibres respectivement étant de préférence disposées en forme de grille.

30. Dispositif selon la revendication 25 et 26 ou 27, caractérisé par le fait que la structure de renforcement (2) est constituée par un support métallique mince, par exemple sous la forme d'une tôle d'aluminium.

31. Dispositif selon l'une des revendications 1 à 30, caractérisé par le fait que la surface (3) du substrat (1) est munie de petits picots en saillie vers le haut.

32. Dispositif selon l'une des revendications 1 à 31, caractérisé par le fait qu'un dispositif de pulvérisation électrostatique (9) est disposé au-dessus du substrat (1) pour appliquer le produit d'enduction liquide sur le substrat (1).

33. Dispositif selon la revendication 32, caractérisé par le fait que le substrat (1) est disposé au-dessous du dispositif de pulvérisation électrostatique (9) en pouvant être déplacé latéralement.

**Claims**

1. Apparatus for manufacturing a coating on a laminar support member, in particular for dressing leather preferably skiver, or substrates with a fibrous surface on at least one side, with an underlay (1) whose surface (3) consists of silicone rubber or silicone resin onto which a fluid coating material is applied in order to manufacture a film which, when hardened, forms the visible side of the coating; wherein the surface (3) of the underlay (1) preferably is provided with a printed pattern, e.g. resembling the grained structure of natural leather, characterised in that the surface (3) of the underlay (1), when a printed pattern is being additionally arranged thereon, is provided with a microscopic roughness.

2. Apparatus for manufacturing a coating on a laminar support member, in particular for dressing leather preferably skiver, or substrates with a fibrous surface on at least one side, with an underlay (1) whose surface (3) consists of silicone rubber or silicone resin, onto which a fluid coating material is applied in order to manufacture a film which, when hardened, forms the visible side of the coating, wherein the surface (3) of the underlay (1) preferably is provided with a printed pattern, e.g. resembling the grained structure of natural leather characterised in that at least the region (4) of the underlay (1) which is adjacent to the surface (3) is electrically conductive and is maintained at a predetermined electrical potential, in particular at zero potential.

3. Apparatus according to claim 1 or 2, characterised in that filler substances (5) are embedded at least in the region (4) of the underlay (1) which is adjacent to the surface (3).

4. Apparatus according to claim 3, characterised in that the filler substances consist of organic substances in powdered form, e.g. powdered leather, powdered wood, powdered wool, powdered cellulose, powdered synthetic plastics material, graphite, or soot.

5. Apparatus according to claim 3, characterised in that the filler substances (5) consist of powdered metal, e.g. aluminium powder.

6. Apparatus according to claims 1 and 3, characterised in that the filler substances (5) consist of hollow micro-spheres.

7. Apparatus according to claims 1 and 3, characterised in that the filler substances consist of solid materials which sublimate in the gaseous phase and thereby form pores.

8. Apparatus according to any one of claims 3 to 7, characterised in that the filler substances (5) have maximum dimensions between 0.1 and 100 µm.

9. Apparatus according to claims 2 and 3, characterised in that the filler substances (5) consist of carbon filaments and/or metal filaments.

10. Apparatus according to claims 2 and 3, characterised in that the filler substances (5) consist of electrically conductive fluid or paste-like substances, such as for example high-molecular polyglycol ethers.

11. Apparatus according to claim 3, characterised in that the filler substances (5) consist of hygroscopic substances such as for example sodium chloride, polyamide, polyglycols.

12. Apparatus according to any one of claims 1 to 11, characterised in that the filler substances (5) are provided in a quantity between 1 to 40 % by volume, at least in the region (4) which is adjacent to the surface (3).

13. Apparatus according to any one of claims 1 to 12, characterised in that the surface (3) of the underlay (1) is subjected to a mechanical and/or physical, or respectively an electrical and/or chemical, surface treatment.

14. Apparatus according to claim 13, characterised in that the surface (3) of the underlay (1) is provided with a micro-perforation.

15. Apparatus according to claim 13, characterised in that the surface (3) of the underlay (1) is flamed.

16. Apparatus according to claim 13, characterised in that the surface (3) of the underlay (1) is exposed to a treatment by electrical spark discharge.

17. Apparatus according to claim 13, characterised in that the surface (3) of the underlay (1) is irradiated e.g. by means of laser beams.

18. Apparatus according to claim 13, characterised in that the surface (3) of the underlay (1) is treated with a solvent, e.g. dimethyl formamide or benzene.

19. Apparatus according to any one of claims 1 to 18, characterised in that the surface (3) of the underlay (1) has a structure resembling the natural grain of leather, whose configuration is repeated on a surface of at least 1.2 m² at least once, without any transitions which produce interruptions at the joining places.

20. Apparatus according to any one of claims 1 to 19, characterised in that the surface (3) of the underlay (1) has a lower electrical conductivity than the region below the surface (3).

21. Apparatus according to any one of claims 1 to 20, characterised in that the underlay (1) is provided with a thin coating (10) on top.

22. Apparatus according to any one of claims 1 to 21, characterised in that the underlay (1) consists of several layers (4, 6) which are arranged parallel to the surface (3) and whereof only the uppermost layer (4) consists of silicone rubber or silicone resin.

23. Apparatus according to claim 22, characterised in that the filler substances (5) are arranged only in the uppermost layer (4).

24. Apparatus according to claim 22, characterised in that the lowermost layer (2) consists of a support layer made of paper.

25. Apparatus according to any one of claims 1 to 24, characterised in that the underlay (1) is provided with a reinforcing arrangement (2, 7).

26. Apparatus according to claim 25, characterised in that the reinforcing arrangement (7) is embedded into the underlay.

27. Apparatus according to claim 25, characterised in that the reinforcing arrangement is arranged as the lowermost layer (2) on the underside of the underlay (1), and is connected with the latter at least in certain places, preferably by means of gluing (at 8).

28. Apparatus according to claim 25 and 26 or 27, characterised in that the reinforcing arrangement (7) consists of a fleece or a woven fabric, preferably of a fibreglass fleece or a fibreglass woven fabric.

29. Apparatus according to claim 25 and 26 or 27, characterised in that the reinforcing arrangement (7) consists of metal filaments, for example aluminium filaments, and/or of carbon filaments, the filaments and/or fibres preferably being arranged in lattice-like manner.

30. Apparatus according to claim 25 and 26 or 27, characterised in that the reinforcing arrangement (2) consists of a thin metal support layer, for example made of sheet aluminium.

31. Apparatus according to any one of claims 1 to 30, characterised in that the surface (3) of the underlay (1) is provided with small thin upwardly-projecting pins.

32. Apparatus according to any one of claims 1 to 31, characterised in that above the underlay (1) there is arranged an electrostatic spraying device (9) for applying the fluid coating material onto the underlay (1).

33. Apparatus according to claim 32, characterised in that the underlay (1) is arranged in laterally displaceable manner below the electrostatic spraying device (9).